(19) Europäisches Patentamt
European Patent Office
Office européen des brevets

(11) EP 4 530 660 A1

(12) EUROPEAN PATENT APPLICATION

(43) Date of publication:
02.04.2025 Bulletin 2025/14

(21) Application number: 24199453.2

(22) Date of filing: 10.09.2024

(51) International Patent Classification (IPC):
G01S 5/14 (2006.01)    G01S 5/02 (2010.01)

(52) Cooperative Patent Classification (CPC):
G01S 5/14; G01S 5/0242; G01S 5/0278

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.09.2023 US 202318475193

(71) Applicant: T-Mobile USA, Inc.
Bellevue, WA 98006-1350 (US)

(72) Inventors:
• TRAN, Emile Minh
  Bellevue, 98006-1350 (US)

• FUNG, Tony Kwok Chung
  Bellevue, 98006-1350 (US)
• TRAN, Antoine T.
  Bellevue, 98006-1350 (US)
• KRUSINSKI, Kurt
  Bellevue, 98006-1350 (US)
• SHAKIL, Muhammad
  Bellevue, 98006-1350 (US)
• KHADIM, Muhammad Arshad
  Bellevue, 98006-1350 (US)
• MCDIARMID, Mark
  Bellevue, 98006-1350 (US)

(74) Representative: Suddaby, Mark Edward
Novagraaf UK
1st Floor
77 Gracechurch Street
London EC3V 0AS (GB)

(54) **DETERMINING CELL TOWER POSITION USING FIXED WIRELESS ACCESS DEVICES**

(57) A computerized method determines precise positions of cell towers using fixed wireless access (FWA) devices. First positioning reference signal (PRS) timing data from a plurality of FWA devices is obtained, wherein the first PRS timing data is associated with PRSs emitted by a cell tower. For each FWA device, a distance between the cell tower and the FWA device is calculated using the first PRS timing data. A cell tower position is then determined using the calculated distances and locations of the FWA devices. The determined cell tower position is then provided for determination of locations of other cellular communication-enabled devices. For instance, second PRS timing data is obtained from a mobile device and a mobile device position of the mobile device is determined using the second PRS timing data and the determined cell tower position. The determined mobile device position is then provided for locating the mobile device.

FIG. 1A

EP 4 530 660 A1

**Description**

BACKGROUND

Determining the locations of mobile, small form factor, and low powered devices, such as Internet of Things (IoT) devices, presents significant challenges. Existing location-determination technology, such as global positioning system (GPS) technology cannot practically be implemented on such devices because GPS technology consumes battery power at too great a rate and small form factor devices do not allow for the inclusion of effective GPS antennae.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A computerized method for determining precise positions of cell towers is described. First positioning reference signal (PRS) timing data from a plurality of fixed wireless access (FWA) devices is obtained, wherein the first PRS timing data is associated with PRSs emitted by a cell tower. For each FWA device of the plurality of FWA devices, a distance between the cell tower and the FWA device is calculated using the first PRS timing data. A cell tower position is then determined using the calculated distances and locations of the plurality of FWA devices. The determined cell tower position is then provided, wherein the determined cell tower position enables the determination of locations of other cellular communication-enabled devices. For instance, in some examples, second PRS timing data is obtained from a mobile device and a mobile device position of the mobile device is determined using the second PRS timing data and the determined cell tower position of the cell tower and positions of other cell towers. The determined mobile device position is then provided for use in locating the mobile device.

BRIEF DESCRIPTION OF THE DRAWINGS

The present description will be better understood from the following detailed description read considering the accompanying drawings, wherein:

    FIG. 1A is a block diagram illustrating an exemplary system for determining positions of cellular towers using fixed wireless access (FWA) devices;
    FIG. 1B is a block diagram illustrating an exemplary system for determining the position of an Internet of Things (IoT) device using determined positions of cellular towers;
    FIG. 2 is a block diagram illustrating an exemplary arrangement of a cell tower and FWA devices and timing information associated with transmitted positioning reference signals (PRSs);
    FIG. 3 is a flowchart illustrating an exemplary method for determining a cell tower position of a cell tower using a plurality of FWA devices;
    FIG. 4 is a flowchart illustrating an exemplary method for determining an IoT device position of an IoT device using determined cell tower positions of associated cell towers; and
    FIG. 5 illustrates an example computing apparatus as a functional block diagram.

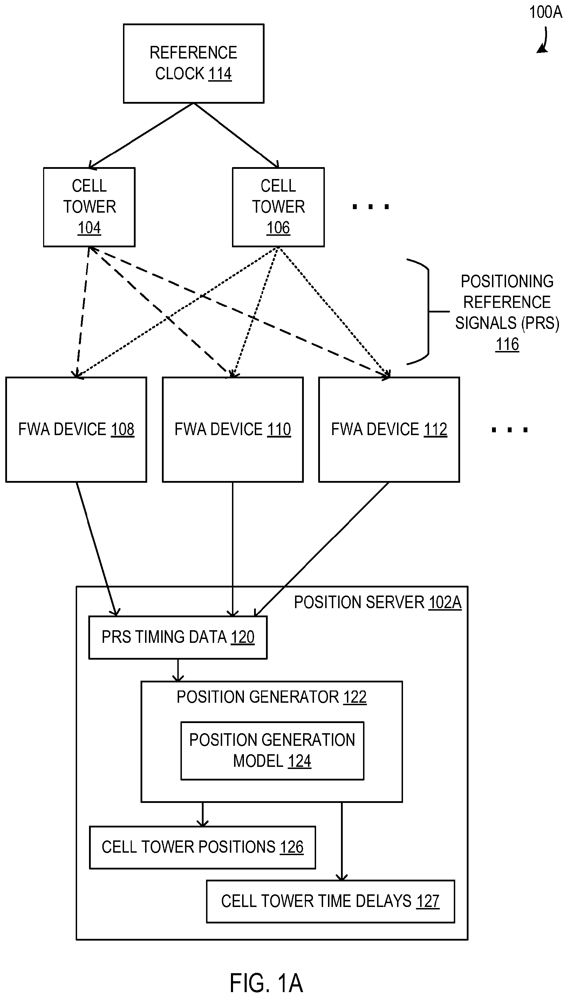

Corresponding reference characters indicate corresponding parts throughout the drawings. In FIGs. 1A to 5, the systems are illustrated as schematic drawings. The drawings may not be to scale. Any of the figures may be combined into a single example or embodiment.

DETAILED DESCRIPTION

Aspects of the disclosure provide systems and methods for determining precise locations of cell towers using fixed wireless access (FWA) devices, and then using the precise locations of the cell towers to determine the locations of other devices, such as Internet of Things (IoT) devices. The disclosure includes collecting or otherwise obtaining positioning reference signal (PRS) timing data from a plurality of FWA devices that is based on PRSs emitted by the cell towers for which positions are being determined. Further, the positions of the FWA devices are known through the use of global positioning system (GPS) technology or the like. The PRS timing data and the positions of the FWA devices are used in combination to determine the positions of the cell towers. Because the FWA devices remain stationary for long periods of time, PRS timing data from the cell towers is obtained repeatedly over time. These repeated instances of PRS timing data are used to determine average positions of the cell towers, thereby reducing the effects of outlying instances that vary significantly when determining the cell tower positions. Additionally, PRS timing data is obtained from an IoT device or similar device. This timing data is used in combination with the determined cell tower positions to determine a precise location of the IoT device, which is then provided for use in locating and/or tracking the IoT device.

The disclosure operates in an unconventional manner at least by using FWA devices that are deployed throughout a geographic location in fixed positions and that are equipped with GPS technology to determine their positions with relatively high accuracy. There are significant, practical barriers to equipping each cell tower and/or station with position-determining technology, such as GPS technology, or otherwise manually determining precise positions for each cell tower and/or station. However, through the use of emitted PRSs and FWA devices with established positions as described herein, the positions of the cell towers can be efficiently determined without requiring the deployment of additional hardware. The determination and updating of the cell tower positions over time using the disclosed systems and methods significantly reduces the resource costs associated with determining accurate and/or precise cell tower positions using other methods.

Further, the disclosure enables the determination of IoT device positions and/or positions of other similar devices (e.g., TDOA-compatible mobile devices) with greater accuracy than other methods based on the accuracy and/or precision of the determined cell tower positions. Many of the limitations associated with determining accurate positions of small, mobile devices such as IoT devices are addressed by the disclosure without requiring significant changes or use of resource by the devices themselves. Using other methods for device position determination, such as including GPS technology in the devices, significantly increases the size and complexity and/or reduces the battery life of those devices.

Additionally, the disclosure enables the determination of time delays associated with cell towers and/or stations. In embodiments where GPS technology is included on a cell tower, the GPS technology does not enable the determination of time delays associated with wire length and/or equipment processing delays of the cell tower. The disclosure uses the precise locations of the FWA devices, and the timing data associated with PRSs received by those FWA devices to also accurately calculate the average time delays of cell towers, which are necessary for the determination of positions of IoT devices as described herein. Thus, the determination of the cell tower time delays by the disclosure enables the accurate determination of device positions and reduces or eliminates resource costs associated with determining those time delays using other methods, such as manually and/or physically determining time delays at individual cell towers.

It should be understood that the disclosure provides systems and/or methods to determine the position of each cell tower (e.g., the transmitting elements of each cell tower) and the time delay and/or associated timing correction that needs to be applied to each cell tower to compensate for the time delay of each cell tower. By determining these two data, the cell tower or station is "calibrated" for use in device position determination and/or other processes. These two data are determined using the positions of each of the FWA devices and the timing data associated with the reception of PRs from each cell tower being calibrated. Further, as described herein, the disclosure provides systems and/or methods for calculating or otherwise determining positions of mobile devices, such as IoT devices or other types of devices that support time difference of arrival (TDOA) processes, with high precision.

FIG. 1A is a block diagram illustrating an exemplary system 100A for determining positions 126 of cellular towers 104-106, or cell towers 104-106, using fixed wireless access (FWA) devices 108-112. In some examples, the system 100A includes a plurality of cell towers 104-106, a plurality of FWA devices 108-112, and a position server 102A. As described herein, the FWA devices 108-112 receive positioning reference signals (PRSs) 116 emitted by the cell towers 104-106. The PRSs 116 emitted by the cell towers 104-106 are emitted at specific times based on a reference clock 114. Thus, the emissions of the PRSs 116 by the various cell towers 104-106 are synchronized to the extent possible (e.g., differences in wire lengths and/or equipment used by each cell tower 104-106 can affect the timing of the PRSs 116). The FWA devices 108-112 provide the PRS timing data 120 associated with received PRSs 116 to the position server 102A and the position server 102A uses the PRS timing data 120 to determine the cell tower positions 126 of the cell towers 104-106 with a certain degree of precision. The details of these operations of the system 100A are described in greater detail below.

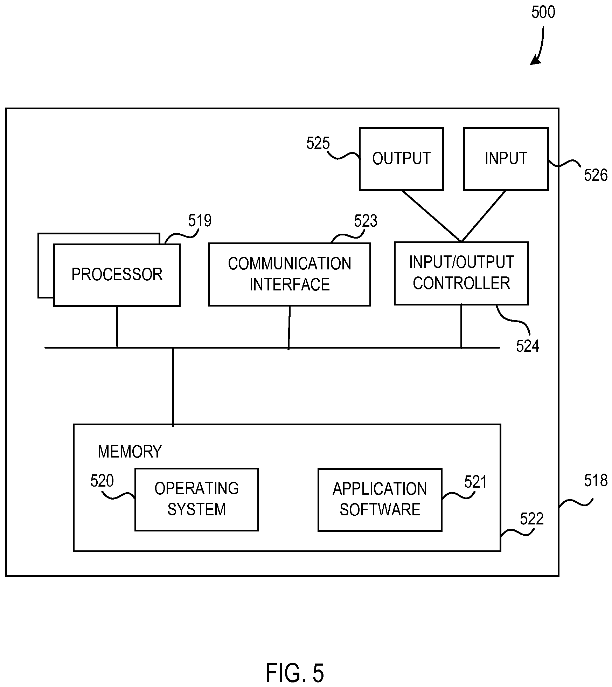

Further, in some examples, the systems 100A-B of FIGs. 1A-B includes one or more computing devices (e.g., the computing apparatus of FIG. 5) that are configured to communicate with each other via one or more communication networks (e.g., an intranet, the Internet, a cellular network, other wireless network, other wired network, or the like). In some examples, entities of the systems 100A-B are configured to be distributed between the multiple computing devices and to communicate with each other via network connections. For example, the position server 102A is executed on a first computing device and the FWA devices 108-112 are other computing devices within the system 100. The first computing device and other computing devices are configured to communicate with each other via network connections. Alternatively, in some examples, other components of the position server 102A (e.g., the position generation model 124 is executed on a separate computing device from the rest of the position server 102A) are executed on separate computing devices and those separate computing devices are configured to communicate with each other via network connections during the operation of the position server 102A. Further, in some examples, the position server 102A (e.g., a cell calibration server 102A) of system 100A and the position server 102B (e.g., mobile position server 102B) of system 100B are located on separate devices that configured to communicate with each other via network connections. In other examples, the position servers 102A and 102B of systems 100A and 100B are located on the same computing device. In other examples, other organizations of computing devices are used to implement systems 100A-B without departing from the description.

In some examples, the cell towers 104-106 include hardware, firmware, and/or software configured to send and receive cellular communications to and from cellular communication-compatible devices, such as mobile phones, the FWAs 108-112, Internet of Things (IoT) devices, or the like. Further, in some examples, the cell towers 104-106 are connected to a controller, such as a base station controller or a radio network controller via a private network (e.g., T1 lines, a wide area network (WAN), a local area network (LAN), various network switches, and other similar components). The cell towers 104-106 are configured to act as interfaces between the devices to which they communicate wirelessly and a carrier network, where all those communications are managed. Thus, the cell towers 104-106 and associated carrier network provide the associated devices, such as the FWAs 108-112, with access to network functions and associated data, such as enabling telephone calls over the cellular network and/or enabling access to data from the Internet. It should be understood that, in some examples, while the general locations of the cell towers 104-106 are well known, some or all of the cell towers 104-106 are not equipped with Global Positioning System (GPS) technology that enables the cell towers 104-106 to precisely determine their locations and/or share precise location data. Furthermore, it should be understood that, in other examples, more, fewer, or different cell towers 104-106 are used without departing from the description. Additionally, in some examples, other types of devices that emit PRSs 116 are used in place of or in addition to the cell towers 104-106 without departing from the description.

In some examples, the reference clock 114 is configured to provide a reference signal to multiple cell towers 104-106 that is used by the cell towers 104-106 to time the emissions of the PRSs 116. In some such examples, the reference clock 114 is connected to a network to which some or all of the cell towers 104-106 are connected, such that the same reference signal is sent to multiple cell towers 104-106. The result is that the timing of the cell towers 104-106 is synchronized to some extent through the shared reference signal that they receive from the reference clock. The use of the reference clock 114 in this way enables the accurate calculation of cell tower positions 126 and/or associated equipment-based time delays 127 as described herein.

In some examples, the PRSs 116 are emitted by the cell towers 104-106 as described herein. A PRS 116 includes timing data that indicates a time at which the PRS 116 was triggered (e.g., the time at which the cell tower 104 began the process of emitting the signal, prior to any signal processing done by equipment of the cell tower 104) based on the synchronized time of the reference clock 114. Further, the PRS 116 includes an identifier associated with the cell tower from which the PRS 116 is emitted. It should be understood that, in most examples, PRSs 116 are emitted as electromagnetic radiation, such as radio waves, in all directions out from the emitting cell tower. Thus, a PRS 116 emitted from a cell tower 104 can be received by an FWA device 108 or other device with compatible signal reception hardware in any direction from the cell tower 104. It should be understood that, in some examples, more and/or different information is included as part of the PRSs 116 without departing from the description. Further, in some examples, the information of the PRSs 116 is transmitted to receivers using various different signal patterns or conventions without departing from the description.

In some examples, the FWA devices 108, 110, and 112 include hardware, firmware, and/or software configured to communicate with cell towers 104-106. Further, the FWA devices 108-112 are configured to provide network access, such as Internet access, to a location, such as a house or an office, in which they are fixed. The FWA devices 108-112 act as interfaces between network-using devices at the associated locations and the cellular network provided by the cell towers 104-106. Thus, the FWA devices 108-112 receive network requests from those network-using devices via the local network of the location and forward those received network requests over the cellular network. Then, upon receiving responses to the requests via the cellular network, the FWA devices 108-112 provide the responses to the network-using devices via the local network (e.g., a local Wi-Fi network and/or wired network). Further, in some examples, the FWAs 108-112 are capable of determining and/or storing precise location data associated with their locations. For instance, in an example, the FWAs 108-112 are configured to include GPS technology that enables them to determine their locations with a high degree of precision. The location data determined and/or stored by the FWAs 108-112 is used in the generation of the PRS timing data 120 and the associated cell tower positions 126 as described below. It should be understood that, in other examples, other types of devices that are placed in fixed locations, that can determine their own position accurately, and that can receive PRSs 116 can be used in addition to or instead of the FWAs 108-112 without departing from the description.

The PRS timing data 120 provided to the position server 102A by the FWA devices 108-112 includes timing data from the received PRSs 116 in addition to timing data indicating the times at which the PRSs 116 were received by the FWA devices 108-112. For instance, in an example, PRS timing data 120 from FWA device 108 in association with the cell tower 104 includes timing data indicating the time X at which the PRS 116 from the cell tower 104 was initiated and timing data indicating the Y time at which the PRS 116 was received by the FWA device 108. The difference between X and Y can be used by the position server 102A during the generation of a cell tower position 126 of cell tower 104 as described herein. Further, in some examples, the PRS timing data 120 includes position data of the FWA device sending the PRS timing data 120. Alternatively, or additionally, the position data of the FWA devices is provided to the position server 102A upon the initial setup of the FWA devices and/or periodically outside of sending the PRS timing data 120. Because the positions of the FWA devices 108-112 are largely fixed and do not change in some examples, the position data of the FWA devices 108-112 does not need to be updated at the position server 102A every time PRS timing data 120 is sent.

The position server 102A includes hardware, firmware, and/or software configured to communicate with the FWA devices 108-112 over network connections, to receive PRS timing data 120, and to calculate or otherwise generate cell tower positions 126 of the cell towers 104-106 using the PRS timing data 120. In some examples, the position server 102A includes a position generator 122 and/or a position generation model 124 as described herein.

In some examples, the position generator 122 obtains the PRS timing data 120 and generates cell tower positions 126 using the PRS timing data 120 as input. In some such examples, the position generator 122 calculates the cell tower positions 126 using one or more algorithms. Alternatively, or additionally, the position generator 122 uses a position generation model 124 that is trained using machine learning techniques to generate accurate cell tower positions 126 when given PRS timing data 120 as input.

For instance, in an example, the position generator 122 obtains PRS timing data 120 associated with cell tower 104 from FWA devices 108, 110, and 112. Because the positions of the three FWA devices 108, 110, and 112 are known by the position server 102A and the time taken by the PRS 116 from cell tower 104 to reach each of the three FWA devices 108, 110, and 112 is provided in the PRS timing data 120, the position of the cell tower 104 can be triangulated. It should be understood that, in other examples, PRS timing data 120 from more and/or different FWA devices are used to calculate a position 126 of the cell tower 104 without departing from the description.

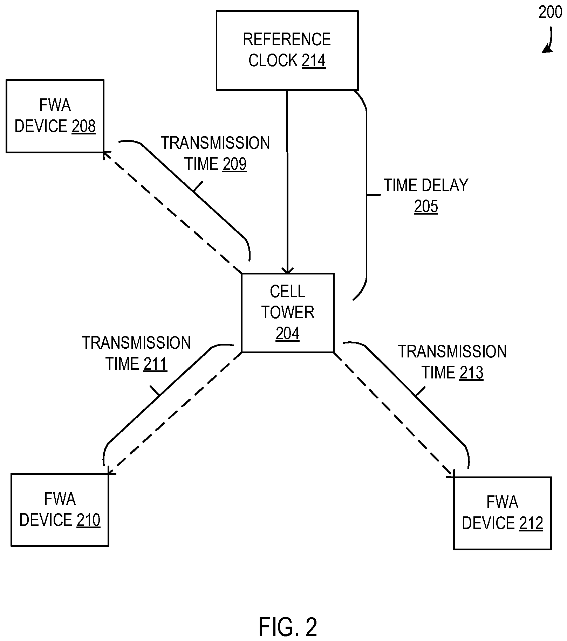

Additionally, in some examples, the time difference from the initiation of the PRS 116 from cell tower 104 and the reception of the PRS 116 by the FWA devices 108-112 includes time taken for the transmission of data along wires of the cell tower 104 and/or processing of signal data by equipment of the cell tower 104. By using PRS timing data 120 from several different FWA devices 108-112, this equipment-based time delay 127 of the cell tower 104 can also be determined by the position generator 122 as part of the generation of the cell tower position 126. See the description of FIG. 2 below for more details.

In some examples, the cell tower positions 126 are calculated or otherwise determined in the form of positions on the surface of the Earth (or other celestial body). Additionally, or alternatively, the cell tower positions 126 include data indicating an altitude of an emitting antenna of the associated cell tower. It should be understood that, in most examples, the cell tower positions 126 are generated in the same format and/or according to the same convention as the position data of the FWA devices 108-112. For instance, in an example where the FWA devices 108-112 provide their positions using GPS technology, the cell tower positions 126 include similar data in the form of latitude and longitude coordinates. In other examples, other types or formats of position data are used with respect to the cell tower positions 126 and/or positions of the FWA devices 108-112 without departing from the description.

In some examples, the position generation model 124 includes hardware, firmware, and/or software configured and/or trained to predict or otherwise generate cell tower positions 126 using the PRS timing data 120 as input. In some such examples, the position generation model 124 is trained using machine learning techniques to improve the accuracy and/or precision of generated cell tower positions 126. For instance, in an example, the position generation model 124 is a regression model and the PRS timing data 120 and locations of the FWA devices 108-112 are used as input values. The position generation model 124 includes a plurality of coefficients that are applied to input values and, as a result of the combinations of those coefficients and the input values, a cell tower position 126 is predicted or otherwise generated. During training, the coefficients associated with input values are adjusted to improve the accuracy of the predicted cell tower positions 126. In an example, a training data entry includes a set of PRS timing data 120 associated with a cell tower 104 and a known cell tower position 126. The PRS timing data 120 of the training data entry is provided to the position generation model 124 and the position generation model predicts a cell tower position 126. The predicted cell tower position 126 is compared to the known cell tower position 126. Based on the differences between the two cell tower positions 126 the position generation model 124, including coefficients therein, are adjusted to improve the likelihood a predicted cell tower position 126 is close to or the same as an actual cell tower position 126 during a future process. In other examples, other types of machine learning techniques are used to train the position generation model 124 without departing from the description.

It should be understood that, in some examples, when the position 126 and the time delay 127 of a cell tower 104 is calculated or otherwise determined, the cell tower 104 is "calibrated". The calibration of the cell tower can be refined and/or updated over time as described herein. Each cell tower 104-106 is calibrated in this same way based on the emitted PRSs received by the FWA devices 108-112 and/or other FWA devices.

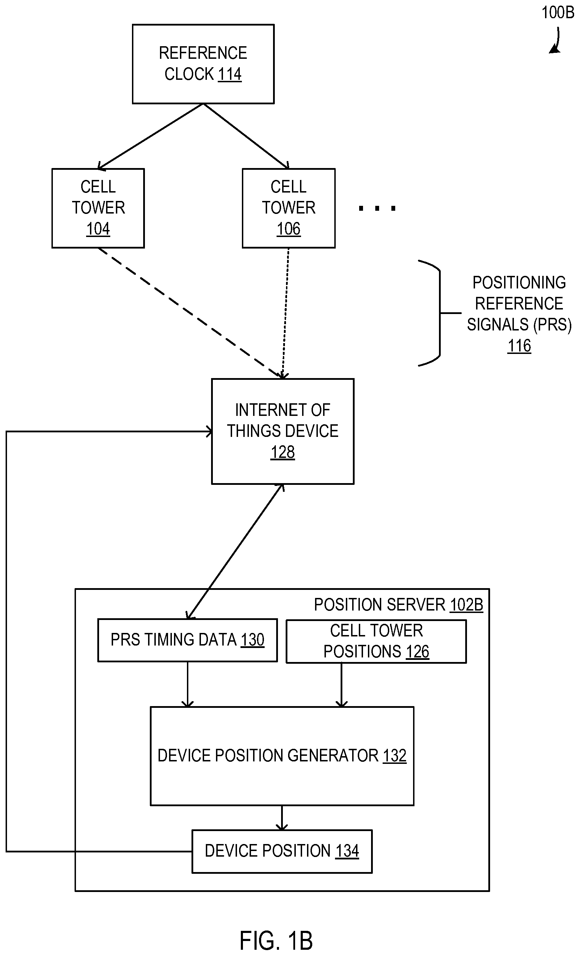

FIG. 1B is a block diagram illustrating an exemplary system 100B for determining the position 134 of an Internet of Things (IoT) device 128 using determined positions 126 of cell towers 108-112. In some examples, the entities in the system 100B are the same as the entities with the same reference numbers in the system 100A (e.g., the cell towers 104-106, the reference clock 114, the PRSs 116, the cell tower positions 126, or the like).

The IoT device 128 includes hardware, firmware, and or software configured to receive PRSs 116 from cell towers 104-106 and to communicate with the position server 102B via a network connection (e.g., a network connection facilitated by one or more of the cell towers 104-106). In some examples, the IoT device 128 is a wearable device, as sensor, smart home device, or other object embedded with wireless communication hardware. The IoT device 128 is a device that is relatively small and/or inexpensive, such that it is impractical to include GPS technology or other location determination technology. However, it is desirable for the location of the IoT device 128 to be determined with some degree of accuracy as described herein. For instance, in an example, the IoT device 128 is a tracking device that can be attached to a pet in order to track the pet's locations when it is outside of the owner's residences. Further, it should be understood that, in other examples, different types of mobile devices are used in place of the IoT device 128 without departing from the description. For instance, in other examples, other small mobile devices that are equipped for receiving PRSs (e.g., TDOA-compatible devices) are tracked and/or positions of those mobile devices are determined as described herein without departing from the description.

In some examples, the IoT device 128 receives PRSs 116 based on reference clock 114 from the cell towers 104-106 that are within range and the IoT device 128 generates PRS timing data 130 based on those received PRSs 116. The PRS timing data 130 includes data indicating the times at which the PRSs 116 were initiated at the cell towers 104-106 and data indicating the times at which the PRSs 116 were received at the IoT device 128. It should be noted that the PRS timing data 130 does not include data indicating the location of the IoT device 128, as the IoT device 128 is generally not fixed in a single location and the determination of the IoT device position 134 is the goal of the described process.

The PRS timing data 130 is provided to the device position generator 132 of the position server 102B as input (e.g., the IoT device 128 sends a location request to the position server 102B including the PRS timing data 130). Further, the device position generator 132 is provided the cell tower positions 126 associated with the cell towers 104-106 for which PRS timing data 130 is received from the IoT device 128. The device position generator 132 is configured to generate or otherwise determine the device position 134 of the IoT device 128 based on the combination of the PRS timing data 130 and the cell tower positions 126. For instance, in an example, the difference between an initiation time and reception time of a PRS 116 for a cell tower 104 is used to determine a distance between the cell tower 104 and the IoT device 128. The cell tower position 126 of the cell tower 104 can be used with the determined distance to determine a circle of possible device positions 134 in reference to the cell tower 104. Then, similar circles of possible device positions 134 are determined based on other cell towers (e.g., cell tower 106), and a position at which the determined circles overlap is determined to be the device position 134 (e.g., triangulation).

Further, in some examples, the cell tower positions 126 include data indicating average equipment-based time delays 127 for each cell tower 104-106 and the device position generator 132 is configured to take the average time delays 127 of the cell towers 104-106 into account when generating the device position 134 (e.g., the time delay 127 of the cell tower 104 is subtracted from the time difference between the PRS initiation and the PRS reception at the IoT device 128). Because the cell tower positions 126 have been determined with a relatively high degree of accuracy, the accuracy of the device position 134 can also be calculated with a high degree of accuracy.

In some examples, the device position 134 is provided back to the IoT device 128, enabling the IoT device 128 to perform operations that rely on its location. Alternatively, or additionally, the device position 134 is provided to another entity that is configured to store or otherwise make use of the device position 134 (e.g., an app on a user's phone displays the location of the IoT device 128 on a map, enabling the user to geographically locate and/or track the IoT device 128). In some such examples, a user is enabled to retrieve the device position 134 from the position server 102B, thus saving energy of the IoT device 128 and occupation of air time that would be used to retrieve the device position 134 and relay it to the user. In other examples, the device position 134 is used in other ways without departing from the description.

In some examples, the systems 100A and 100B are configured to operate together, wherein the system 100A generates the cell tower positions 126 and provides those cell tower positions 126 to the position server 102B. The position server 102B then generates the device positions 134 as described herein. Further, in some examples, the system 100A continuously refines the cell tower positions 126 of the cell towers 104-106 as larger quantities of PRS timing data 120 are collected over time and variations in PRS 116 measurements are averaged and approach increasingly accurate values. Refined cell tower positions 126 are provided to the position server 102B periodically and/or as they are generated, such that the accuracy of the generated device positions 134 are also improved.

FIG. 2 is a block diagram illustrating an exemplary arrangement 200 of a cell tower 204 and FWA devices 208-212 and timing information associated with transmitted positioning reference signals (PRSs). In some examples, the arrangement 200 is part of or otherwise associated with systems such as systems 100A and/or 100B of FIGs. 1A and/or 1B, respectively.

The arrangement 200 includes a cell tower 204 that is connected to a reference clock 214 as described herein. Further, the cell tower 204 is configured to emit PRSs that are received by the FWA devices 208, 210, and 212. The timing data associated with the received PRSs is used to accurately and/or precisely determine the position of the cell tower 204 based on the known positions of the FWA devices 208, 210, and 212. It should be understood that, in other examples, more or different FWA devices are used to determine the position of the cell tower 204 without departing from the description. Further, in other examples, the FWA devices 208-212 are used to determine the positions of more and/or difference cell towers without departing from the description.

In some examples, the position of the cell tower 204 relative to the positions of the FWA devices 208, 210, and 212 and the time delay of the cell tower 204 are determined mathematically using the timing data from emitted PRSs and the known positions of the FWA devices 208, 210, and 212. When FWA device 208 receives an emitted PRS from the cell tower 204, the FWA device 208 is provided with a time at which the PRS was triggered by the reference clock 214 ($T_{tx}$) and a time at which the FWA device 208 received the PRS ($T_{rx}$). The difference between those two times is equal to the sum of the time delay 205 associated with the equipment specific to the cell tower 204 (e.g., a combination of a time $t_{diff}$ representing the time difference between the universal time of the reference clock and the time of the cell tower 204 and a time $t_{equip}$ representing the time delay due to the equipment of the cell tower 204) and the transmission time 209 between the cell tower 204 and the FWA device 208. Similar timing data is determined for or by each of the FWA device 210 and the FWA device 212. The time delay 205 is consistent for a given emitted PRS, but it may differ to some degree between different emitted PRSs by the cell tower 204 (e.g., performing signal processing prior to emission of the PRS may take slightly different quantities of time for each PRS). An equation 1 for calculating the time delay of the cell tower 204 is provided below.

$$(t_{diff} + t_{equip}) = T_{rx} - T_{tx} - distance(C, FWA) * c \qquad (1)$$

Equation 1 includes the time delay of the cell tower 204 represented by the sum of $t_{diff}$ and $t_{equip}$. This time delay is calculated using equation 1 by subtracting the time of transmission $T_{tx}$ and the time interval of signal travel (e.g., the multiplication of the speed of light c and the distance between the cell tower 204 and the FWA 208) from the time of reception Trx.

The transmission times 209, 211, and 213 associated with the FWA devices 208, 210, and 212, respectively, are generally consistent for each PRS, as the PRSs are transmitted to the FWA devices at the speed of light through the atmosphere, which is constant. Slight variations are possible, but these variations should become insignificant through the averaging of multiple measurements over time, as described herein.

The determination of the average time delay 205 of the cell tower 204 and the position of the cell tower 204 requires the combination of the timing data (e.g., PRS timing data 120) from the group of FWA devices 208-212. By analyzing the timing data in combination, possible time delay values are determined, and possible cell tower positions associated with those time delay values are determined. By using data from three or more FWA devices 208-212, a single, valid time delay and cell tower position is determinable.

In some examples, as multiple PRSs are received at the FWA devices 208-212, the time delay 205 and position of the cell tower 204 are calculated or otherwise determined multiple times. The multiple values for the time delay 205 and cell tower 204 position are averaged or otherwise combined to improve the overall accuracy of those values and to reduce the effects of variations in the measurements of individual PRSs.

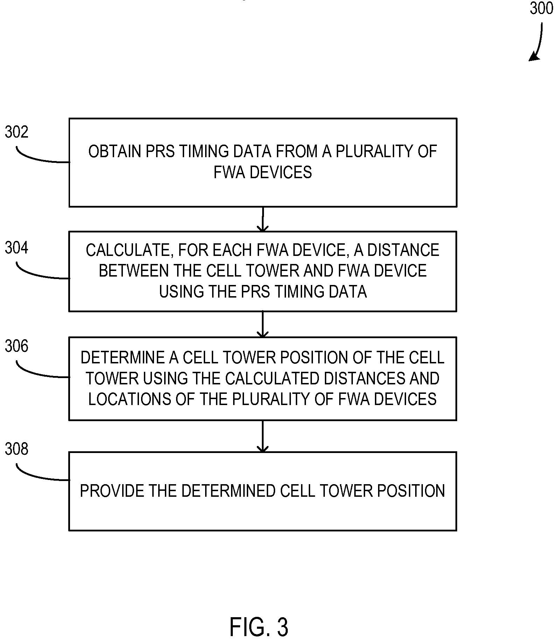

FIG. 3 is a flowchart illustrating an exemplary method 300 for determining a cell tower position (e.g., cell tower position 126) of a cell tower (e.g., cell tower 104, 204) using a plurality of FWA devices (e.g., FWA devices 108-112, 208-212). In some examples, the method 300 is executed or otherwise performed in a system, such as system 100A of FIG. 1A, and/or in reference to an arrangement of devices, such as arrangement 200 of FIG. 2.

At 302, PRS timing data (e.g., PRS timing data 120) is received from a plurality of FWA devices. In some examples, the PRS timing data is received from the FWA devices by a position server (e.g., position server 102A) via network connections, such as cellular network connections. The PRS timing data includes data indicating times at which the PRSs were triggered to be emitted and times at which the PRSs were received by the FWA devices. Further, the PRS timing data includes data indicating the source cell towers of the received PRSs in examples where PRSs are received from multiple cell towers. Additionally, or alternatively, in some examples, PRS timing data is obtained or otherwise received from the FWA devices periodically (e.g., every 30 minutes) and/or based on the occurrence of events within the associated system (e.g., FWA devices send PRS timing data to the position server every time they receive a PRS from a cell tower). It should be understood that, in some examples, while the obtained PRS timing data may include data associated with multiple PRSs emitted by a cell tower, PRS timing data associated with a single PRS emitted by the cell tower is used separately to determine a cell tower position as described herein. Then, the obtained PRS timing data associated with other emitted PRSs can be used to also determine cell tower positions and the results can be averaged or otherwise combined as described herein.

At 304, for each FWA device, a distance between a cell tower and the FWA device is calculated using the PRS timing data. In some examples, the distance is calculated based on a determined transmission time (e.g., transmission time 209) between the cell tower and the FWA device and the rate of travel of the transmitted signal, which is the speed of light through the atmosphere in most examples. Further, in some examples, distances between multiple pairs of cell towers and FWA devices are calculated in order to determine cell tower positions of multiple cell towers as described herein.

At 306, a cell tower position of the cell tower is determined using the calculated distances and locations of the plurality of FWA devices. In some examples, the determination of the cell tower position is performed using a triangulation process (e.g., the process described above with respect to FIG. 2). For instance, in an example, the positions of the FWA devices are placed on a map and the calculated distances associated therewith are used to draw circles around each of the FWA device positions. The circles represent possible positions of the cell tower based only on PRS timing data from the individual FWA devices. However, when three circles are drawn around three FWA devices, the point at which all three circles intersect is determined to be the cell tower position of the cell tower. It should be understood that, in other examples, physically mapping and/or drawing the FWA devices and associated circles is not necessary to determine the cell tower position, which may instead be determined mathematically and/or through the use of machine learning (ML)-trained models, as described herein.

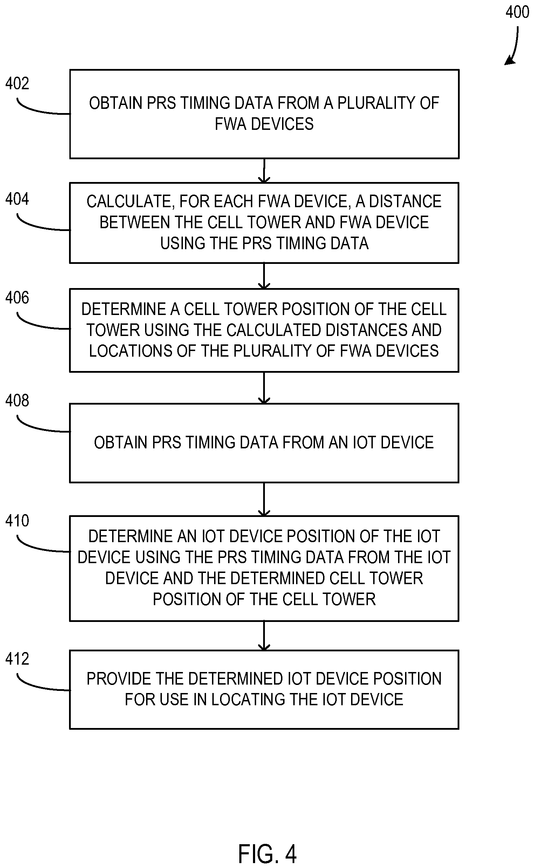

At 308, the determined cell tower position is provided. In some examples, the determined cell tower position is stored and/or provided to another entity of the system to be used in the locating and/or tracking of other devices that are within PRS range of the cell tower, as described herein with respect to FIG. 1B and/or FIG. 4. Alternatively, or additionally, the cell tower position is stored and/or used for other purposes without departing from the description.

FIG. 4 is a flowchart illustrating an exemplary method 400 for determining an IoT device position (e.g., device position 134) of an IoT device (e.g., IoT device 128) using determined cell tower positions (e.g., cell tower positions 126) of associated cell towers (e.g., cell towers 104-106). In some examples, the method 400 is executed or otherwise performed in a system, such as system 100B of FIG. 1B, and/or in reference to an arrangement of devices, such as arrangement 200 of FIG. 2. It should be understood that, in some examples, the methods 300 and 400 are performed synchronously and/or otherwise during the same time period. Alternatively, or additionally, in some examples, the method 300 is performed asynchronously and/or prior to the method 400 and the cell tower positions and/or time delays determined during the method 300 are cached or otherwise stored for later use during method 400 as described herein.

At 402, PRS timing data is obtained from a plurality of FWA devices. In some examples, the PRS timing data is obtained in the same way as described above with respect to 302 of FIG. 3.

At 404, for each FWA device, the distance between the cell tower and the FWA device is calculated using the PRS timing data. In some examples, the distances are calculated in the same way as described above with respect to 304 of FIG. 3 and/or with respect to FIG. 2.

At 406, a cell tower position of the cell tower is determined using the calculated distances and locations of the plurality of FWA devices. In some examples, the determination of the cell tower position is performed in the same way as described above with respect to 306 of FIG. 3.

At 408, PRS timing data (e.g., PRS timing data 130) is obtained from an IoT device. In some examples, the PRS timing data is obtained from the IoT device by a position server (e.g., position server 102B) over a network connection, such as a cellular network connection. Further, in some examples, the obtained PRS timing data includes data associated with a plurality of cell towers 104-106 based on PRSs emitted from those cell towers 104-106 and received by the IoT device 128. The PRS timing data includes data indicating times at which the PRSs are triggered and data indicating times at which the IoT device 128 receives the PRSs, as described herein.

At 410, an IoT device position of the IoT device is determined using the PRS timing data of the IoT device and the determined cell tower position of the cell tower. In some examples, the IoT device position is determined using cell tower positions of a plurality of cell towers in addition to the associated PRS timing data. For instance, in an example, the PRS timing data is used to determine distances between the IoT device and the cell towers and then those distances are used with the cell tower positions of the plurality of cell towers to determine the IoT device position, as described herein.

Additionally, or alternatively, the determined cell tower position of the cell tower and the positions of the other cell towers include data indicating equipment-based time delays of the cell towers. This time delay data is also used in the determination of the IoT device position (e.g., the time delay data is used during the calculation of distances between the IoT device and the cell towers).

At 412, the determined IoT device position is provided for use in locating the IoT device. In some examples, the determined IoT device position is provided to the IoT device itself based on the obtained PRS timing data from the IoT device. In some such examples, the IoT device uses the provided IoT device position to perform operations that rely on accurate positioning of the IoT device. Alternatively, or additionally, the determined IoT device position is provided to another entity, enabling that entity to locate and/or track the IoT device using the IoT device position. Further, in some examples, the IoT device position is determined repeatedly over time and the repeatedly determined IoT device position is provided repeatedly, whereby movement of the IoT device can be tracked over that time period.

In some examples, the methods 300 and 400 further include obtaining the locations of the plurality of FWA devices, wherein the obtained locations include GPS data collected by the plurality of FWA devices. The obtained locations of the plurality of FWA devices are used to determine the cell tower position of the cell tower. It should be understood that, in some examples, FWA devices are configured to collect GPS data repeatedly over time and to update their positions based on the repeatedly collected GPS data, as described herein.

Further, in some examples, obtaining the PRS timing data from the plurality of FWA devices includes obtaining multiple PRS timing data instances from the plurality of FWA devices over a time period. Calculating, for each FWA device, a distance between the cell tower and the FWA device using the PRS timing data includes calculating a distance for each PRS timing data instance and calculating an average distance for each FWA device using the distances calculated for each PRS timing data instance of the FWA device, wherein the calculated average distances are used to determine the cell tower position. Additionally, or alternatively, in some examples, the calculated distances are consistently updated based on the most recently obtained PRS timing data instances and, as a result of the updated distances, the determined cell tower position is updated using the updated distances.

Additionally, or alternatively, in some examples, the cell tower position is determined using a position generation model (e.g., position generation model 124) that is strained using machine learning techniques. The PRS timing data and/or calculated distances are provided to the position generation model as input and the cell tower position is generated by the position generation model.

Exemplary Operating Environment

The present disclosure is operable with a computing apparatus according to an embodiment as a functional block diagram 500 in FIG. 5. In an example, components of a computing apparatus 518 are implemented as a part of an electronic device according to one or more embodiments described in this specification. The computing apparatus 518 comprises one or more processors 519 which may be microprocessors, controllers, or any other suitable type of processors for processing computer executable instructions to control the operation of the electronic device. Alternatively, or in addition, the processor 519 is any technology capable of executing logic or instructions, such as a hard-coded machine. In some examples, platform software comprising an operating system 520 or any other suitable platform software is provided on the apparatus 518 to enable application software 521 to be executed on the device. In some examples, determining cell tower positions and using those cell tower positions to determine IoT device positions as described herein is accomplished by software, hardware, and/or firmware.

In some examples, computer executable instructions are provided using any computer-readable media that is accessible by the computing apparatus 518. Computer-readable media include, for example, computer storage media such as a memory 522 and communications media. Computer storage media, such as a memory 522, include volatile and non-volatile, removable, and non-removable media implemented in any method or technology for storage of information such as computer readable instructions, data structures, program modules or the like. Computer storage media include, but are not limited to, Random Access Memory (RAM), Read-Only Memory (ROM), Erasable Programmable Read-Only Memory (EPROM), Electrically Erasable Programmable Read-Only Memory (EEPROM), persistent memory, phase change memory, flash memory or other memory technology, Compact Disk Read-Only Memory (CD-ROM), digital versatile disks (DVD) or other optical storage, magnetic cassettes, magnetic tape, magnetic disk storage, shingled disk storage or other magnetic storage devices, or any other non-transmission medium that can be used to store information for access by a computing apparatus. In contrast, communication media may embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Propagated signals per se are not examples of computer storage media. Although the computer storage medium (the memory 522) is shown within the computing apparatus 518, it will be appreciated by a person skilled in the art, that, in some examples, the storage is distributed or located remotely and accessed via a network or other communication link (e.g., using a communication interface 523).

Further, in some examples, the computing apparatus 518 comprises an input/output controller 524 configured to output information to one or more output devices 525, for example a display or a speaker, which are separate from or integral to the electronic device. Additionally, or alternatively, the input/output controller 524 is configured to receive and process an input from one or more input devices 526, for example, a keyboard, a microphone, or a touchpad. In one example, the output device 525 also acts as the input device. An example of such a device is a touch sensitive display. The input/output controller 524 may also output data to devices other than the output device, e.g., a locally connected printing device. In some examples, a user provides input to the input device(s) 526 and/or receives output from the output device(s) 525.

The functionality described herein can be performed, at least in part, by one or more hardware logic components. According to an embodiment, the computing apparatus 518 is configured by the program code when executed by the processor 519 to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Program-specific Standard Products (ASSPs), System-on-a-chip systems (SOCs), Complex Programmable Logic Devices (CPLDs), Graphics Processing Units (GPUs).

At least a portion of the functionality of the various elements in the figures may be performed by other elements in the figures, or an entity (e.g., processor, web service, server, application program, computing device, or the like) not shown in the figures.

Although described in connection with an exemplary computing system environment, examples of the disclosure are capable of implementation with numerous other general purpose or special purpose computing system environments, configurations, or devices.

Examples of well-known computing systems, environments, and/or configurations that are suitable for use with aspects of the disclosure include, but are not limited to, mobile or portable computing devices (e.g., smartphones), personal computers, server computers, hand-held (e.g., tablet) or laptop devices, multiprocessor systems, gaming consoles or controllers, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, and the like. In general, the disclosure is operable with any device with processing capability such that it can execute instructions such as those described herein. Such systems or devices accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure include different computer-executable instructions or components having more or less functionality than illustrated and described herein.

In examples involving a general-purpose computer, aspects of the disclosure transform the general-purpose computer into a special-purpose computing device when configured to execute the instructions described herein.

An example system comprises a processor; and a memory comprising computer program code, the memory and the computer program code configured to cause the processor to: obtain first positioning reference signal (PRS) timing data from a plurality of fixed wireless access (FWA) devices, wherein the first PRS timing data is associated with PRSs emitted by a cell tower; calculate, for each FWA device of the plurality of FWA devices, a distance between the cell tower and the FWA device using the first PRS timing data; determine a cell tower position of the cell tower using the calculated distances and locations of the plurality of FWA devices; and provide the determined cell tower position, wherein the determined cell tower position enables determination of locations of other cellular communication-enabled devices.

An example computerized method comprises obtaining first positioning reference signal (PRS) timing data from a plurality of fixed wireless access (FWA) devices, wherein the first PRS timing data is associated with PRSs emitted by a cell tower; calculating, for each FWA device of the plurality of FWA devices, a distance between the cell tower and the FWA device using the first PRS timing data; determining a cell tower position of the cell tower using the calculated distances and locations of the plurality of FWA devices; obtaining second PRS timing data from a mobile device, wherein the second PRS timing data is associated with PRSs emitted by the cell tower and other cell towers; determining a mobile device position of the mobile device using the second PRS timing data and the determined cell tower position of the cell tower and positions of the other cell towers; and providing the determined mobile device position for use in locating the mobile device.

One or more computer storage media having computer-executable instructions that, upon execution by a processor, case the processor to at least: obtain first positioning reference signal (PRS) timing data from a plurality of fixed wireless access (FWA) devices, wherein the first PRS timing data is associated with PRSs emitted by a cell tower; calculate, for each FWA device of the plurality of FWA devices, a distance between the cell tower and the FWA device using the first PRS timing data; determine a cell tower position of the cell tower using the calculated distances and locations of the plurality of FWA devices; obtain second PRS timing data from a mobile device, wherein the second PRS timing data is associated with PRSs emitted by the cell tower and other cell towers; determine a mobile device position of the mobile device using the second PRS timing data and the determined cell tower position of the cell tower and positions of the other cell towers; and provide the determined mobile device position for use in locating the mobile device.

Alternatively, or in addition to the other examples described herein, examples include any combination of the following:

- further comprising: obtaining locations of the plurality of FWA devices, wherein the obtained locations include Global Position System (GPS) data collected by the plurality of FWA devices; and wherein the obtained locations of the plurality of FWA devices are used to determine the cell tower position of the cell tower.
- wherein obtaining the first PRS timing data from the plurality of FWA devices includes obtaining multiple PRS timing data instances of the first PRS timing data from the plurality of FWA devices over a time period; and wherein calculating, for each FWA device of the plurality of FWA devices, a distance between the cell tower and the FWA device using the first PRS timing data includes: calculating a distance for each PRS timing data instance of the first PRS timing data; and calculating an average distance for each FWA device of the plurality of FWA devices using the distances calculated for each PRS timing data instance of the FWA device, wherein the calculated average distances are used to determine the cell tower position.

- wherein calculating, for each FWA device of the plurality of FWA devices, a distance between the cell tower and the FWA device using the first PRS timing data further includes periodically calculating, for each FWA device of the plurality of FWA devices, an updated distance between the cell tower and the FWA device using a most recently obtained PRS timing data instance of the first PRS timing data; and wherein determining the cell tower position of the cell tower includes determining an updated cell tower position of the cell tower using the updated distances between the cell tower and the plurality of FWA devices.

- wherein determining the cell tower position of the cell tower includes: providing at least one of the first PRS timing data or the calculated distances for the plurality of FWA devices to a position generation model, wherein the position generation model is trained using machine learning techniques; and generating the cell tower position of the cell tower using the position generation model.
- further comprising determining an equipment-based time delay of the cell tower using the first PRS timing data, wherein the equipment-based time delay is used to determine the cell tower position of the cell tower.
- wherein determining the cell tower position of the cell tower includes triangulating the cell tower position based on the locations of the plurality of FWA devices, the calculated distances, and the determined equipment-based time delay.

Any range or device value given herein may be extended or altered without losing the effect sought, as will be apparent to the skilled person.

Examples have been described with reference to data monitored and/or collected from the users (e.g., user identity data with respect to profiles). In some examples, notice is provided to the users of the collection of the data (e.g., via a dialog box or preference setting) and users are given the opportunity to give or deny consent for the monitoring and/or collection. The consent takes the form of opt-in consent or opt-out consent.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The embodiments illustrated and described herein as well as embodiments not specifically described herein but within the scope of aspects of the claims constitute an exemplary means for obtaining first positioning reference signal (PRS) timing data from a plurality of fixed wireless access (FWA) devices, wherein the first PRS timing data is associated with PRSs emitted by a cell tower; exemplary means for calculating, for each FWA device of the plurality of FWA devices, a distance between the cell tower and the FWA device using the first PRS timing data; exemplary means for determining a cell tower position of the cell tower using the calculated distances and locations of the plurality of FWA devices; exemplary means for obtaining second PRS timing data from a mobile device, wherein the second PRS timing data is associated with PRSs emitted by the cell tower and other cell towers; exemplary means for determining a mobile device position of the mobile device using the second PRS timing data and the determined cell tower position of the cell tower and positions of the other cell towers; and exemplary means for providing the determined mobile device position for use in locating the mobile device.

The term "comprising" is used in this specification to mean including the feature(s) or act(s) followed thereafter, without excluding the presence of one or more additional features or acts.

In some examples, the operations illustrated in the figures are implemented as software instructions encoded on a computer readable medium, in hardware programmed or designed to perform the operations, or both. For example, aspects of the disclosure are implemented as a system on a chip or other circuitry including a plurality of interconnected, electrically conductive elements.

The order of execution or performance of the operations in examples of the disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the disclosure.

When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

**Claims**

1.  A system comprising:

    a processor; and
    a memory comprising computer program code, the memory and the computer program code configured to cause the processor to:

    obtain first positioning reference signal (PRS) timing data from a plurality of fixed wireless access (FWA) devices, wherein the first PRS timing data is associated with PRSs emitted by a cell tower;
    calculate, for each FWA device of the plurality of FWA devices, a distance between the cell tower and the FWA device using the first PRS timing data;
    determine a cell tower position of the cell tower using the calculated distances and locations of the plurality of FWA devices; and
    provide the determined cell tower position, wherein the determined cell tower position enables determination of other locations of other cellular communication-enabled devices.

2.  The system of claim 1, wherein the computer program code is configured to further cause the processor to:

    obtain the locations of the plurality of FWA devices, wherein the obtained locations include Global Position System (GPS) data collected by the plurality of FWA devices; and
    wherein the obtained locations of the plurality of FWA devices are used to determine the cell tower position of the cell tower.

3.  The system of claim 1, wherein obtaining the first PRS timing data from the plurality of FWA devices includes obtaining multiple PRS timing data instances of the first PRS timing data from the plurality of FWA devices over a time period; and

    wherein calculating, for each FWA device of the plurality of FWA devices, a distance between the cell tower and the FWA device using the first PRS timing data includes:

    calculating a distance for each PRS timing data instance of the first PRS timing data; and
    calculating an average distance for each FWA device of the plurality of FWA devices using the distances calculated for each PRS timing data instance of the FWA device, wherein the calculated average distances are used to determine the cell tower position,
    optionally wherein calculating, for each FWA device of the plurality of FWA devices, the distance between the cell tower and the FWA device using the first PRS timing data further includes periodically calculating, for each FWA device of the plurality of FWA devices, an updated distance between the cell tower and the FWA device using a most recently obtained PRS timing data instance of the first PRS timing data; and

    wherein determining the cell tower position of the cell tower includes determining an updated cell tower position of the cell tower using the updated distances between the cell tower and the plurality of FWA devices.

4.  The system of claim 1, wherein determining the cell tower position of the cell tower includes:

    providing at least one of the first PRS timing data or the calculated distances for the plurality of FWA devices to a position generation model, wherein the position generation model is trained using machine learning techniques; and
    generating the cell tower position of the cell tower using the position generation model.

5.  The system of claim 1, wherein the computer program code is configured to further cause the processor to determine an equipment-based time delay of the cell tower using the first PRS timing data, wherein the equipment-based time delay is used to determine the cell tower position of the cell tower, and

optionally determining the cell tower position of the cell tower includes triangulating the cell tower position based on the locations of the plurality of FWA devices, the calculated distances, and the determined equipment-based time delay.

6. A computerized method comprising:

obtaining first positioning reference signal (PRS) timing data from a plurality of fixed wireless access (FWA) devices, wherein the first PRS timing data is associated with PRSs emitted by a cell tower;

calculating, for each FWA device of the plurality of FWA devices, a distance between the cell tower and the FWA device using the first PRS timing data;

determining a cell tower position of the cell tower using the calculated distances and locations of the plurality of FWA devices;

obtaining second PRS timing data from a mobile device, wherein the second PRS timing data is associated with the PRSs emitted by the cell tower and other cell towers;

determining a mobile device position of the mobile device using the second PRS timing data and the determined cell tower position of the cell tower and positions of the other cell towers; and

providing the determined mobile device position for use in locating the mobile device.

7. The computerized method of claim 6, further comprising:

obtaining the locations of the plurality of FWA devices, wherein the obtained locations include Global Position System (GPS) data collected by the plurality of FWA devices; and

wherein the obtained locations of the plurality of FWA devices are used to determine the cell tower position of the cell tower.

8. The computerized method of claim 6, wherein obtaining the first PRS timing data from the plurality of FWA devices includes obtaining multiple PRS timing data instances of the first PRS timing data from the plurality of FWA devices over a time period; and

wherein calculating, for each FWA device of the plurality of FWA devices, a distance between the cell tower and the FWA device using the first PRS timing data includes:

calculating a distance for each PRS timing data instance of the first PRS timing data; and

calculating an average distance for each FWA device of the plurality of FWA devices using the distances calculated for each PRS timing data instance of the FWA device, wherein the calculated average distances are used to determine the cell tower position, optionally wherein calculating, for each FWA device of the plurality of FWA devices, the distance between the cell tower and the FWA device using the first PRS timing data further includes periodically calculating, for each FWA device of the plurality of FWA devices, an updated distance between the cell tower and the FWA device using a most recently obtained PRS timing data instance of the first PRS timing data; and

wherein determining the cell tower position of the cell tower includes determining an updated cell tower position of the cell tower using the updated distances between the cell tower and the plurality of FWA devices.

9. The computerized method of claim 6, wherein determining the cell tower position of the cell tower includes:

providing at least one of the first PRS timing data or the calculated distances for the plurality of FWA devices to a position generation model, wherein the position generation model is trained using machine learning techniques; and

generating the cell tower position of the cell tower using the position generation model.

10. The computerized method of claim 6, further comprising determining an equipment-based time delay of the cell tower using the first PRS timing data, wherein the equipment-based time delay is used to determine the cell tower position of the cell tower, and optionally wherein determining the cell tower position of the cell tower includes triangulating the cell tower position based on the locations of the plurality of FWA devices, the calculated distances, and the determined equipment-based time delay.

11. A computer storage medium has computer-executable instructions that, upon execution by a processor, cause the processor to at least:

obtain first positioning reference signal (PRS) timing data from a plurality of fixed wireless access (FWA) devices, wherein the first PRS timing data is associated with PRSs emitted by a cell tower;

calculate, for each FWA device of the plurality of FWA devices, a distance between the cell tower and the FWA device using the first PRS timing data;

determine a cell tower position of the cell tower using the calculated distances and locations of the plurality of FWA devices;

obtain second PRS timing data from a mobile device, wherein the second PRS timing data is associated with the PRSs emitted by the cell tower and other cell towers;

determine a mobile device position of the mobile device using the second PRS timing data and the determined cell tower position of the cell tower and positions of the other cell towers; and

provide the determined mobile device position for use in locating the mobile device.

12. The computer storage medium of claim 11, wherein the computer-executable instructions, upon execution by the processor, further cause the processor to at least:

obtain locations of the plurality of FWA devices, wherein the obtained locations include Global Position System (GPS) data collected by the plurality of FWA devices; and

wherein the obtained locations of the plurality of FWA devices are used to determine the cell tower position of the cell tower.

13. The computer storage medium of claim 11, wherein obtaining the first PRS timing data from the plurality of FWA devices includes obtaining multiple PRS timing data instances of the first PRS timing data from the plurality of FWA devices over a time period; and

wherein calculating, for each FWA device of the plurality of FWA devices, a distance between the cell tower and the FWA device using the first PRS timing data includes:

calculating a distance for each PRS timing data instance of the first PRS timing data; and

calculating an average distance for each FWA device of the plurality of FWA devices using the distances calculated for each PRS timing data instance of the FWA device, wherein the calculated average distances are used to determine the cell tower position,

optionally wherein calculating, for each FWA device of the plurality of FWA devices, the distance between the cell tower and the FWA device using the first PRS timing data further includes periodically calculating, for each FWA device of the plurality of FWA devices, an updated distance between the cell tower and the FWA device using a most recently obtained PRS timing data instance of the first PRS timing data; and

wherein determining the cell tower position of the cell tower includes determining an updated cell tower position of the cell tower using the updated distances between the cell tower and the plurality of FWA devices.

14. The computer storage medium of claim 11, wherein determining the cell tower position of the cell tower includes:

providing at least one of the first PRS timing data or the calculated distances for the plurality of FWA devices to a position generation model, wherein the position generation model is trained using machine learning techniques; and

generating the cell tower position of the cell tower using the position generation model.

15. The computer storage medium of claim 11, wherein the computer-executable instructions, upon execution by the processor, further cause the processor to at least determine an equipment-based time delay of the cell tower using the first PRS timing data, wherein the equipment-based time delay is used to determine the cell tower position of the cell tower.

FIG. 1A

100B

REFERENCE CLOCK 114

CELL TOWER 104

CELL TOWER 106

. . .

POSITIONING REFERENCE SIGNALS (PRS) 116

INTERNET OF THINGS DEVICE 128

POSITION SERVER 102B

PRS TIMING DATA 130

CELL TOWER POSITIONS 126

DEVICE POSITION GENERATOR 132

DEVICE POSITION 134

FIG. 1B

FIG. 2

300

302 OBTAIN PRS TIMING DATA FROM A PLURALITY OF
FWA DEVICES

304 CALCULATE, FOR EACH FWA DEVICE, A DISTANCE
BETWEEN THE CELL TOWER AND FWA DEVICE
USING THE PRS TIMING DATA

306 DETERMINE A CELL TOWER POSITION OF THE CELL
TOWER USING THE CALCULATED DISTANCES AND
LOCATIONS OF THE PLURALITY OF FWA DEVICES

308 PROVIDE THE DETERMINED CELL TOWER POSITION

FIG. 3

400

402 — OBTAIN PRS TIMING DATA FROM A PLURALITY OF FWA DEVICES

404 — CALCULATE, FOR EACH FWA DEVICE, A DISTANCE BETWEEN THE CELL TOWER AND FWA DEVICE USING THE PRS TIMING DATA

406 — DETERMINE A CELL TOWER POSITION OF THE CELL TOWER USING THE CALCULATED DISTANCES AND LOCATIONS OF THE PLURALITY OF FWA DEVICES

408 — OBTAIN PRS TIMING DATA FROM AN IOT DEVICE

410 — DETERMINE AN IOT DEVICE POSITION OF THE IOT DEVICE USING THE PRS TIMING DATA FROM THE IOT DEVICE AND THE DETERMINED CELL TOWER POSITION OF THE CELL TOWER

412 — PROVIDE THE DETERMINED IOT DEVICE POSITION FOR USE IN LOCATING THE IOT DEVICE

FIG. 4

500

525 — OUTPUT    INPUT — 526

519    523

PROCESSOR    COMMUNICATION
INTERFACE    INPUT/OUTPUT
CONTROLLER

524

MEMORY

520    OPERATING
SYSTEM    APPLICATION
SOFTWARE — 521

522 — 518

FIG. 5

Europäisches
Patentamt

European
Patent Office

Office européen
des brevets

# EUROPEAN SEARCH REPORT

**Application Number**

EP 24 19 9453

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 333 575 A2 (QUALCOMM INC [US]) 15 June 2011 (2011-06-15) | 1-3,5-8, 10-13,15 | INV. G01S5/14 |
| Y | * abstract * <br> * paragraphs [0005] - [0010] * <br> * paragraphs [0025] - [0033] * <br> * paragraphs [0040] - [0043] * <br> * paragraphs [0062] - [0069] * <br> ----- | 4,9,14 | ADD. G01S5/02 |
| X | US 2020/404614 A1 (DONG WEI [CN] ET AL) 24 December 2020 (2020-12-24) | 1-3,5-8, 10-13,15 | |
| Y | * abstract * <br> * figure 7 * <br> * paragraphs [0003] - [0004] * <br> * paragraphs [0011] - [0012] * <br> * paragraphs [0022] - [0028] * <br> * paragraph [0038] * <br> * paragraph [0066] * <br> ----- | 4,9,14 | |
| X | US 2023/101962 A1 (CHOI JEONGSIK [US] ET AL) 30 March 2023 (2023-03-30) | 1-15 | |
| Y | * paragraphs [0015] - [0017] * <br> * paragraphs [0021] - [0034] * <br> * figures 1, 2, 7-9 * <br> * paragraphs [0049] - [0058] * <br> * paragraphs [0069] - [0077] * <br> ----- | 4,9,14 | **TECHNICAL FIELDS SEARCHED (IPC)** <br><br> G01S |

The present search report has been drawn up for all claims

| Place of search | Date of completion of the search | Examiner |
|---|---|---|
| Munich | 7 February 2025 | Haugg, Sabine |

EPO FORM 1503 03.82 (P04C01)

## ANNEX TO THE EUROPEAN SEARCH REPORT
## ON EUROPEAN PATENT APPLICATION NO.

EP 24 19 9453

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2025

| Patent document cited in search report | | Publication date | Patent family member(s) | | Publication date |
|---|---|---|---|---|---|
| EP 2333575 | A2 | 15-06-2011 | BR | PI0618280 A2 | 23-08-2011 |
| | | | CA | 2627515 A1 | 18-05-2007 |
| | | | CA | 2744847 A1 | 18-05-2007 |
| | | | CA | 2744873 A1 | 18-05-2007 |
| | | | CA | 2744874 A1 | 18-05-2007 |
| | | | CN | 106054129 A | 26-10-2016 |
| | | | EP | 1960805 A2 | 27-08-2008 |
| | | | EP | 2333575 A2 | 15-06-2011 |
| | | | EP | 2891896 A1 | 08-07-2015 |
| | | | JP | 5474923 B2 | 16-04-2014 |
| | | | JP | 5726402 B2 | 03-06-2015 |
| | | | JP | 6100306 B2 | 22-03-2017 |
| | | | JP | 2009515201 A | 09-04-2009 |
| | | | JP | 2012105311 A | 31-05-2012 |
| | | | JP | 2014090451 A | 15-05-2014 |
| | | | JP | 2015200657 A | 12-11-2015 |
| | | | KR | 20080074971 A | 13-08-2008 |
| | | | KR | 20100084691 A | 27-07-2010 |
| | | | WO | 2007056738 A2 | 18-05-2007 |
| US 2020404614 | A1 | 24-12-2020 | CN | 110248378 A | 17-09-2019 |
| | | | EP | 3755029 A1 | 23-12-2020 |
| | | | US | 2020404614 A1 | 24-12-2020 |
| | | | WO | 2019170108 A1 | 12-09-2019 |
| US 2023101962 | A1 | 30-03-2023 | US | 2019362237 A1 | 28-11-2019 |
| | | | US | 2023101962 A1 | 30-03-2023 |

EPO FORM P0459

For more details about this annex : see Official Journal of the European Patent Office, No. 12/82